# EUROPEAN PATENT SPECIFICATION

(11) **EP 1 414 932 B1**
(45) Date of publication and mention of the grant of the patent: **02.02.2011**
(21) Application number: 02757697.4
(22) Date of filing: 27.06.2002
(51) Int. Cl.: C10L 1/00

(54) **BIODIESEL-FISCHER-TROPSCH HYDROCARBON BLEND**
BIODIESEL-FISCHER-TROPSCH KOHLENWASSERSTOFFGEMISCH
MELANGE D'HYDROCARBURES BIODIESEL-FISCHER-TROPSCH

(30) Priority: 02.07.2001 ZA 200105423; 02.07.2001 US 301904 P
(43) Date of publication of application: 06.05.2004
(73) Proprietor: Sasol Technology (Proprietary) Limited, 2196 Johannesburg, Transvaal (ZA)
(72) Inventor: DE BOER, Jake, 0157 Pretoria (ZA); Lamprecht, Delanie, Wenning Street SW5, Vanderbijlpark (ZA)
(74) Representative: von Samson-Himmelstjerna, Friedrich
(86) International application number: PCT/ZA2002/000104
(87) International publication number: WO 2003/004588

(56) References cited:
- US-A- 6 056 793

## Description

### FIELD OF INVENTION

This invention relates to blending Fischer-Tropsch fuel with biodiesel.

### BACKGROUND OF THE INVENTION

Various companies globally are processing various agriculturally based fatty oils to "biodiesel", which is typically the methyl or ethyl ester of the respective fatty acids of the triglyceride fatty oils.

This biodiesel can be used "neat" as a diesel substitute, but more typically is used as a blend (between 5-20%) with conventional (crude based) diesel, for example, SAE 962065.

Advantages of using biodiesel include the attractive low sulphur and low aromatics content, excellent lubricity and as a renewable fuel, the low net impact on the environment (CO₂ emissions etc) compared with fossil fuels.

The oxygen content of biodiesel is generally considered to aid some particulate matter (PM) reduction (ref. SAE 1999-01-1475).

Disadvantages for biodiesel when compared to the proposed 2000 World Wide Fuel Charter for diesel (Category IV) include:
- Marginal cetane no. (50 vs. recommended >55)
- a fuel density that exceeds the recommended density
- excessive viscosity at 40°C
- a measurably lower calorific value
- marginal properties for cloud point and final boiling point

Some characteristics of biodiesel are thus sub-optimal with respect to the intentions of engine manufacturers.

Fischer-Tropsch diesel can be produced from preferably natural gas but also other hydrocarbon feedstocks, and shares the characteristics with biodiesel of an environmentally friendly low sulphur, low aromatics content fuel. Whereas biodiesel consists of mainly linear oxygenates (esters), Fischer-Tropsch diesel consists of mainly highly linear paraffins.

US 6 056 793 A discloses biodiesel/syncrude blends in a blending ratio up to 30% biodiesel: 70% syncrude.

### SUMMARY OF THE INVENTION

In this specification, unless the context clearly indicates the contrary, "Biodiesel" is considered to encompass all biologically derived oils such as, but not limited to, rape seed, cotton, sunflower, coconut and palm, animal fats, soya, etc.; which may have been processed to methyl or ethyl esters of the triglyceride fatty oils.

According to a first aspect of the invention, there is provided a biodiesel and a hydroprocessed Fischer-Tropsch derived diesel blend, whereby the characteristics of hydroprocessed Fischer-Tropsch derived diesel are used to improve the "diesel" characteristics of biodiesel, for example, fatty methyl esters.

The Fischer-Tropsch derived hydrocarbon is blended with biodiesel in varying ratios to improve the resultant diesel fuel's characteristics.

Thus the invention provides a hydrocarbon composition for use in compression ignition engines (Cl), according to claim.

The composition may has viscosity below 4.1 cSt.

The volumetric blending ratio of the blend of claim 1 is from 1:4 to 4:1.

The volumetric blending ratio may be from 1:2 to 2:1.

Typically the volumetric blending ratio is 1:1.

The hydrocarbon composition may have a cetane number in excess of 50 typically in excess of 55.

The hydrocarbon composition may have a Cold Filter Plugging Point (CFPP) in accordance with IP 309 of below -12°C, typically below -15°C.

Typically the biodiesel may comprise of a mixture of linear C₁₀ - C₂₀ methyl esters with minor quantities of water, glycerol and methanol.

The Fischer-Tropsch hydrocarbon which is blended with biodiesel may be derived from a Fischer-Tropsch synthesis process using a catalyst which is based on a metal selected from a group consisting of iron, cobalt or ruthenium or mixtures thereof.

The composition of the Fischer-Tropsch hydrocarbon may include a varying mixture of paraffins, olefins and oxygenates. Typically the Fischer-Tropsch hydrocarbon comprises a mixture of both linear and branched C₈ - C₂₀ paraffins, C₈ - C₂₀ olefins and C₇- C₂₀ alcohols.

The Fischer-Tropsch hydrocarbon may be a Fischer-Tropsch diesel.

The Fischer-Tropsch hydrocarbon preferably includes hydroprocessed Fischer-Tropsch hydrocarbon.

The invention use of a composition as a blending component for a hydrocarbon composition useful in Compression ignition engines (CI engines), said composition comprising hydroprocessed Fischer-Tropsch derived diesel and biodiesel as defined in claim 7.

The composition has a density of at least 0.8 kg/l at 15°C.

The blending component has a viscosity below 4.1 cSt.

The volumetric blending ratio of Fischer-Tropsch derived hydrocarbon and biodiesel in the composition is from 1:4 to 4:1.

The volumetric blending ratio of Fischer-Tropsch derived hydrocarbon and biodiesel in the blending component may be from 1:2 to 2:1.

Typically the volumetric blending ratio of Fischer-Tropsch derived hydrocarbon and biodiesel in the blending component is 1:1.

The invention extends to a method of increasing the density of a hydrocarbon by blending of biodiesel into the hydrocarbon composition as defined in claim 9.

The volumetric ratio may be at least 1:2, typically about 1:1.

### Example of the Invention

The invention will now be illustrated, without limiting the scope thereof, by way of the following examples and illustrative values.

### Example 1 - Blending Rapeseed Methyl Ester with hydroprocessed Fischer-Tropsch derived diesel

A hydroprocessed Fischer-Tropsch derived diesel, also referred to as a gas-to-liquids or GTL diesel, was blended in various volumetric ratio's with rapeseed methyl ester and the properties thereof were measured.

Blending Gas-to-Liquid (GTL) Fuel, a hydroprocessed Ascher-Tropsch derived diesel, with biodiesel has synergistic benefits which are obtained from the combined good qualities of both fuels. Neither biodiesel nor GTL Fuel contains aromatics or sulphur, which would normally limit blending ratios with conventional diesel.. GTL Fuel improves the cold flow properties and increases the viscosity associated with biodiesel. On the other hand, Biodiesel increases the GTL Fuel density without weakening its low energy density. More biodiesel (50%) can be mixed with GTL Fuel when used as a replacement base fuel than the standard 20% blends with conventional diesel.

Biodiesel is prone to gel formation in cold weather. GTL Fuel, on the other hand, has good cold flow properties and a high cetane value as a consequence of the predominately methyl branching that occurs in the terminal positions of the paraffinic chains during the isomerisation process. This type of branching prevents wax crystallisation while maintaining a high cetane number. GTL Fuel has excellent thermal stability that exceeds premium diesel requirements. Other good biodiesel properties include its high flash point, which makes it a safe fuel to use. Both GTL Fuel and Biodiesel are readily biodegradable and non-toxic if spilt.

GTL Fuel - Biodiesel blends were prepared from biodiesel that was produced from rapeseed oil, (also called rapeseed methyl ester). The blend formulations comprised 90%, 80%, 65%, 50% and 20% biodiesel mixtures with GTL Fuel. The fuel properties of GTL Fuel and biodiesel and blends thereof, are shown in Table 1,2 and Table 3. The digits following the B in the table header indicate the volumetric percentage of the biodiesel in the composition.

The net, or lower, volumetric heating values of the GTL Fuel - biodiesel blends (see Table 2) were calculated from the gross heating value results obtained through the ASTM D240 test method, by subtracting the heat of condensation of water.

**Table 1: Full specification analysis of GTL Fuel - biodiesel blends**

| **Analysis** | **Units** | **Method** | **B100** | **B90** | **B80** | **B65** | **B50** | **B20** | **GTL** |
|---|---|---|---|---|---|---|---|---|---|
| Colour | | ASTM D1500 | 1 | 1 | 1 | 1 | 1 | <1 | <1 |
| Appearance | | Caltex CMM76 | 1 | 1 | 1 | 1 | 1 | 1 | 1 |
| Density @ 20 °C | kg/l | ASTM D4052 | 0.880 | 0.868 | 0.857 | 0.839 | 0.822 | 0.788 | 0.764 |
| Density @ 15°C | kg/l | ASTM D4052 | 0.883 | 0.871 | 0.860 | 0.843 | 0.825 | 0.791 | 0.768 |
| Distillation | | ASTM D86 | | | | | | | |
| IBP | °C | | 323 | 173 | 166 | 166 | 162 | 153 | 150 |
| 5% | °C | | 333 | 186 | 228 | 199 | 189 | 176 | 173 |
| 10% | °C | | 335 | 321 | 285 | 222 | 204 | 185 | 178 |
| 20% | °C | | 336 | 330 | 320 | 280 | 239 | 203 | 192 |
| 30% | °C | | 337 | 333 | 330 | 312 | 278 | 225 | 208 |
| 40% | °C | | 337 | 335 | 334 | 326 | 306 | 249 | 226 |
| 50% | °C | | 338 | 336 | 336 | 332 | 321 | 271 | 244 |
| 60% | °C | | 338 | 337 | 338 | 335 | 330 | 294 | 263 |
| 70% | °C | | 339 | 338 | 339 | 337 | 334 | 310 | 281 |
| 80% | °C | | 341 | 339 | 340 | 339 | 337 | 323 | 297 |
| 90% | °C | | 346 | 342 | 343 | 342 | 340 | 333 | 315 |
| 95% | °C | | 352 | 353 | 355 | 352 | 348 | 338 | 326 |
| FBP | °C | | 354 | 359 | 360 | 357 | 355 | 345 | 334 |
| Recovery | vol% | | 99 | 99 | 98 | 99 | 99 | 99 | 98 |
| Residue | vol% | | 0.5 | 0.5 | 1.0 | 0.5 | 0.5 | 0.7 | 1.0 |
| Flash point | °C | ASTM D93 | 125 | 100 | 84 | 73 | 68 | 61 | 59 |
| Viscosity @40 °C | cSt | ASTM D445 | 4.49 | 4.11 | 3.72 | 3.28 | 2.89 | 2.27 | 1.97 |
| CFPP | °C | IP 309 | -12 | -13 | -14 | <-15 | <-15 | <-15 | -20 |
| Ash content | mass% | ASTM D482 | <0.01 | <0.01 | <0.01 | <0.01 | <0.01 | <0.01 | <0.01 |
| Sediment | mass% | ASTM D473 | <0.01 | <0.01 | <0.01 | <0.01 | <0.01 | <0.01 | <0.01 |
| Water | vol% | ASTM D1744 | 0.033 | 0.023 | 0.022 | 0.019 | 0.015 | 0.008 | 0.003 |
| Carbon Residue | mass% | ASTM D524 | 0.19 | 0.17 | 0.14 | 0.11 | 0.08 | 0.03 | 0.02 |
| Sulphur | mass% | ASTM D5453 | 0.0004 | 0.0004 | 0.0003 | 0.0003 | 0.0002 | 0.0001 | 0.0001 |
| Cu corr. | rating | ASTM D130 | 1b | 1b | 1b | 1b | 1b | 1b | 1b |
| Acid number | mgKOH/ g | ASTM D664 | 0.101 | 0.086 | 0.073 | 0.056 | 0.048 | 0.023 | 0.001 |
| Cetane | | ASTM D613 | 63 | 63 | 63 | 63 | 66 | 69 | 71 |
| Elec. Conductivity | pS/m | | 140 | 130 | 100 | 70 | 40 | 10 | 0 |
| O₂ stability | mg/100 ml | ASTM D2274 | 5.7 | 4.8 | 4.1 | 3.1 | 2.1 | 0.16 | 0.21 |
| Bromine number | gBr/100 g | IP 129 | 77.1 | 68.4 | 59.3 | 53.2 | 38.0 | 15.9 | 0.8 |
| Nitrogen | mg/l | ASTM D5291 | 2 | 1 | 1 | 1 | 1 | <1 | <1 |

**Table 2: Heat of combustion of GTL Fuel - biodiesel blends**

| | **Gross heating value (MJ/kg)** | **Hydrogen content (mass %)** | **Net heating value (MJ/kg)** | **Density (kg/l)** | **Net heating value (MJ/l)** |
|---|---|---|---|---|---|
| **B(100)** | 39.973 | 11.92 | 37.444 | 0.880 | 32.950 |
| **B(90)** | 40.565 | 12.15 | 37.987 | 0.868 | 32.973 |
| **B(80)** | 41.330 | 12.81 | 38.612 | 0.857 | 33.090 |
| **B(65)** | 42.124 | 13.69 | 39.219 | 0.839 | 32.905 |
| **B(50)** | 43.189 | 13.19 | 40.390 | 0.822 | 33.201 |
| **B(20)** | 45.346 | 14.42 | 42.286 | 0.788 | 33.321 |
| **GTL** | 47.015 | 14.98 | 43.836 | 0.764 | 33.491 |

The lubricity properties of the GTL Fuel - biodiesel blends were determined according to the ASTM D6078 and ASTM D6079 test methods which define the scuffing load ball-on-cylinder (SL BOCLE) and high-frequency reciprocating rig (HFRR) lubricity evaluation test methods respectively. Results are shown in Table 3.

**Table 3: High-frequency reciprocating rig (HFRR) and scuffing load ball-on-cylinder (SL BOCLE) lubricity evaluation of GTL Fuel - biodiesel blends**

| | **B100** | **B90** | **B80** | **B65** | **B50** | **B20** | **GTL** |
|---|---|---|---|---|---|---|---|
| **HFRR ( WSD µm)** | 141 | 156 | 150 | 148 | 152 | 166 | 651 |
| **SL BOCLE Load (g)** | >6000 | >6000 | >6000 | >6000 | >6000 | 6000 | 2800 |

Characterisation and quantification of the neat biodiesel and GTL Fuel was obtained through Gas Chromatograph Mass Spectrometry (GC MS), Gas Chromatograph Flame lonisation Detection (GC-FID) and Fluorescent Indicator Adsorption (FIA).

Diesel density specifications are tending to become tighter. This is due to the conflicting requirements of a lower density fuel to reduce particulate matter emissions, whilst retaining a minimum density to ensure adequate heat content, which relates to fuel economy. The tightening density specification can be seen from the EN 590:1999 Diesel Fuel Specifications which correlates to EURO 3 emission specifications. Since biodiesel has a higher density than GTL diesel, the greater the biodiesel fraction in the biodiesel - GTL Fuel blends the higher its density (see Table 1 and Table 2). A blend including 30% biodiesel exceeded a density of 0.8 kg/l

In general, the higher the density of a hydrocarbon fuel, the greater is its volumetric heat of combustion and the lower is its volumetric fuel consumption. However, from Table 2 it is obvious that biodiesel, which is not a hydrocarbon fuel but a methyl ester, has a low net volumetric heating value, also called energy density. Biodiesel will therefore not assist in raising GTL Fuel's energy density but will not lower it significantly. In terms of specifications, higher density for GTL Fuel can therefore be realised by biodiesel blending without influencing its energy density negatively.

Distillation temperature also influences emissions. A high T90 or T95 temperature will increase the quantity of unburned hydrocarbons and the level of particulate matter emitted. All GTL Fuel - biodiesel blend formulations were below the maximum current T95 distillation EN 590 Diesel Specification limit of 360 °C.

GTL Fuel is mostly paraffinic in nature. 98% (volume %) GTL Fuel is comprised of paraffins and 2% comprises olefins in a hydrocarbon range from C8 to C24. Less than 0.001 volume % *aromatics* are present in GTL Fuel according to FIA analysis.

In an engine, the viscosity influences the injection fuel spray. Fuel with a very high viscosity can reduce fuel flow rates, resulting in inadequate fuelling. Such a fuel also atomises poorly, resulting in poor combustion, loss of efficiency and an increase in CO and hydrocarbon emissions. On the other hand, if the fuel viscosity is too low, the injection spray is too soft and will not penetrate far enough into the cylinder and loss of power will occur. Blending GTL Fuel with biodiesel improves the CFPP value of biodiesel and it is possible to attain the winter grade specifications of some European countries (see Table 1).

Like GTL Fuel, neat rapeseed methyl ester (RME), or biodiesel, has a high cetane number relative to conventional diesel. Blends of biodiesel with GTL Fuel exhibit a high cetane number.

GTL Fuel blends with biodiesel also improves fuel properties that do not affect engine performance directly. These include the high water content, acid number, bromine number, oxygen stability of biodiesel and the tendency of biodiesel to form carbonous residue. The amount of *water* present in the neat biodiesel and its acid number are within the EU Draft Specification for biodiesel and ASTM PS121 biodiesel specifications, but is much higher than conventional or synthetic diesel fuel and can lead to corrosion problems. Biodiesel blend formulations with GTL Fuel, with its very low water content and acid number, decrease the water content and acid number of biodiesel proportionally.

The bromine number of GTL Fuel is very low because it contains less than 2% olefins whereas that of biodiesel is high (see Table1) because of the large percentage unsaturated methyl esters. Blending of GTL Fuel with biodiesel does not only decrease the susceptibility of biodiesel to gum formation by lowering the bromine number, but also increases biodiesel's resistance to degrade in the presence of oxygen. The insolubles formed in neat RME in the presence of oxygen is much higher than specified according to the Biodiesel EU Draft Specification.

Thus, it is believed, more biodiesel can be mixed with GTL Fuel than the standard 20% blends with conventional diesel. GTL Fuel - biodiesel blend ratios up to 50% biodiesel still comply with present EN 590:1999 Diesel Specifications. This is in part due to the high cetane number, good cold flow properties and stability of GTL Fuel. Neither biodiesel nor GTL Fuel contains aromatics and both are sulphur free. GTL Fuel improves the cold flow characteristics of biodiesel, whereas biodiesel does not negatively effect the energy density of the GTL fuel.

Biodiesel increases GTL Fuel density without influencing the GTL Fuel energy density negatively.

The inventors further believe that advantage of the invention include that with progressively increased blending, the biodiesel characteristics are improved with respect to:
- cetane number exceeds recommended 55
- density is reduced to within the desired range
- viscosity is reduced to within the specified range
- the overall calorific value is closer to "standard" ULSD diesel
- the flash point is closer to "standard" ULSD diesel
- the cold flow properties are better
- the T90 distillation is moderated slightly downwards

It is believed that positive biodiesel characteristics such as the low aromatics and sulfur content and biodegradability are retained.

The GTL fuel - biodiesel blend may be utilised as a blending component for blending with crude derived diesel without adversely affecting the good GTL properties or on-spec crude derived qualities.

Thus, blending Fischer-Tropsch hydrocarbons with biodiesel allows a more compatible mixture and high biodiesel content, whereas blending biodiesel with crude based diesel favours predominantly a minor fraction (5-20%) of diesel.

The Fischer-Tropsch hydrocarbon-biodiesel blend may be used as a blending component for blending with crude derived diesel in any blend ratio to enhance the crude derived diesel quality without adversely affecting any of the properties typically included in specifications for crude derived diesel.

## Claims

1. A hydrocarbon composition for use in compression ignition (Cl) engines, **characterized in that** said composition comprises hydroprocessed Fischer-Tropsch derived diesel having a density of below 0.8 kg/l at 15°C, and bio-diesel comprising methyl and/or ethyl esters of biologically derived triglyceride fatty oils and having a density of above 0.8 kg/l at 15°C, in a volumetric ratio of hydroprocessed Fischer-Tropsch diesel to bio-diesel of from 1:4 to 4:1, said composition having a density of above 0.8 kg/l at 15°C and a viscosity of below 4.1 cSt.

2. A hydrocarbon composition as claimed in claim 1 of the preceding claims, **characterized in that** the volumetric ratio is from 1:2 to 2:1, typically 1:1.

3. A hydrocarbon composition as claimed in claim 1 or claim 2, **characterized in that** said composition has a cetane number in excess of 50, typically in excess of 55.

4. A hydrocarbon composition as claimed in any one of the preceding claims, **characterized in that** said composition has a CFPP in accordance with IP 309 of below -12°C, typically below -15°C.

5. A hydrocarbon composition as claimed in any one of the preceding claims, **characterized in that** said bio-diesel comprises of a mixture of linear C₁₀ - C₂₀ methyl esters with minor quantities of water, glycerol, and methanol.

6. A hydrocarbon composition as claimed in any one of the preceding claims, **characterized in that** the hydroprocessed Fischer-Tropsch derived diesel which is blended with bio-diesel is derived from a Fischer-Tropsch synthesis process using a catalyst which is based on a metal selected from a group consisting of iron, cobalt, and ruthenium, or mixtures of two or more thereof.

7. Use of a composition comprising hydroprocessed Fischer-Tropsch derived diesel having a density of below 0.8 kg/l at 15°C, and bio-diesel comprising methyl and/or ethyl esters of biologically derived triglyceride fatty oils and having a density of above 0.8 kg/l at 15°C, in a volumetric ratio of hydroprocessed Fischer-Tropsch derived diesel to bio-diesel of from 1:4 to 4:1, said composition having a density of above 0.8 kg/l at 15°C and a viscosity of below 4.1 cSt, as a blending component for a hydrocarbon composition useful in compression ignition engines (Cl engines).

8. Use as claimed in claim 7, **characterized in that** the volumetric ratio is from 1:2 to 2:1, typically 1:1.

9. A method of increasing the density of a hydrocarbon composition comprising hydroprocessed Fischer-Tropsch derived diesel having a density of below 0.8 kg/l at 15°C, by blending of bio-diesel comprising methyl and/or ethyl esters of biologically derived triglyceride fatty oils and having a density of above 0.8 kg/l at 15°C, into the hydrocarbon composition in a volumetric ratio of hydrocarbon composition to bio-diesel of from 1:4 to 4:1, so that said composition has a density of above 0.8 kg/l at 15°C and a viscosity of below 4.1 cSt.

10. A method as claimed in claim 9, **characterized in that** the volumetric ratio is 1:2 to 2:1, typically about 1:1.

## Patentansprüche

1. Kohlenwasserstoffzusammensetzung zur Verwendung in Kompressionszündungsmotoren, **dadurch gekennzeichnet, dass** die genannte Zusammensetzung hydrobehandelten, nach Fischer-Tropsch gewonnenen Diesel umfasst, der bei 15°C eine Dichte aufweist, die unter 0,8 kg/l liegt, und Biodiesel, der Methyl- und/oder Ethylester biologisch abgeleiteter Triglycerid-Fettöle aufweist und bei 15°C eine Dichte besitzt, die über 0,8 kg/l liegt, in einem Volumenverhältnis von hydrobehandeltem Fischer-Tropsch Diesel zu Biodiesel von 1:4 bis 4:1, wobei die genannte Zusammensetzung bei 15°C eine Dichte von höher als 0,8 kg/l und eine Viskosität von niedriger als 4,1 cSt aufweist.

2. Kohlenwasserstoffzusammensetzung gemäß Anspruch 1 der vorhergehenden Ansprüche, **dadurch gekennzeichnet, dass** das Volumenverhältnis von 1:2 bis 2:1, insbesondere 1:1, beträgt.

3. Kohlenwasserstoffzusammensetzung gemäß Anspruch 1 oder 2, **dadurch gekennzeichnet, dass** die genannte Zusammensetzung eine Cetanzahl von höher als 50 aufweist, insbesondere höher als 55.

4. Kohlenwasserstoffzusammensetzung gemäß einem der vorhergehenden Ansprüche, **dadurch gekennzeichnet, dass** die genannte Zusammensetzung einen CFPP-Wert gemäß IP 309 aufweist, der niedriger ist als -12°C, insbesondere niedriger als -15°C.

5. Kohlenwasserstoffzusammensetzung gemäß einem der vorhergehenden Ansprüche, **dadurch gekennzeichnet, dass** der genannte Biodiesel eine Mischung linearer C₁₀ - C₂₀ Methylester mit geringen Wasser-, Glycerol- und Methanolmengen aufweist.

6. Kohlenwasserstoffzusammensetzung gemäß einem der vorhergehenden Ansprüche, **dadurch gekennzeichnet, dass** der hydrobehandelte, nach Fischer-Tropsch gewonnene, mit Biodiesel vermischte Diesel nach einem Fischer-Tropsch Syntheseverfahren unter Verwendung eines Katalysators abgeleitet ist, dem ein Metall, ausgewählt aus einer Gruppe bestehend aus Eisen, Kobalt und Ruthenium, bzw. Mischungen zweier oder mehrerer von diesen, zugrunde liegt.

7. Verwendung einer Zusammensetzung, die hydrobehandelten, nach Fischer-Tropsch gewonnenen Diesel umfasst, der bei 15°C eine Dichte aufweist, die unter 0,8 kg/l liegt, und Biodiesel, der Methyl- und/oder Ethylester biologisch abgeleiteter Triglycerid-Fettöle aufweist und bei 15°C eine Dichte besitzt, die über 0,8 kg/l liegt, in einem Volumenverhältnis von hydrobehandeltem Fischer-Tropsch Diesel zu Biodiesel von 1:4 bis 4:1, wobei die genannte Zusammensetzung bei 15°C eine Dichte von höher als 0,8 kg/l und eine Viskosität von niedriger als 4,1 cSt aufweist, als Mischkomponente für eine Kohlenwasserstoffzusammensetzung zur Verwendung in Kompressionszündungsmotoren.

8. Verwendung gemäß Anspruch 7, **dadurch gekennzeichnet, dass** das Volumenverhältnis von 1:2 bis 2:1, insbesondere 1:1, beträgt.

9. Verfahren zur Erhöhung der Dichte einer Kohlenwasserstoffzusammensetzung, die hydrobehandelten, nach Fischer-Tropsch gewonnenen Diesel umfasst, der bei 15°C eine Dichte aufweist, die unter 0,8 kg/l liegt, indem Biodiesel, der Methyl- und/oder Ethylester biologisch abgeleiteter Triglycerid-Fettöle aufweist und bei 15°C eine Dichte besitzt, die über 0,8 kg/l liegt, in die Kohlenwasserstoffzusammensetzung in einem Volumenverhältnis der Kohlenwasserstoffzusammensetzung zu Biodiesel von 1:4 bis 4:1 gemischt wird, so dass die genannte Zusammensetzung eine Dichte von höher als 0,8 kg/l und eine Viskosität von niedriger als 4,1 cSt aufweist.

10. Verfahren gemäß Anspruch 9, **dadurch gekennzeichnet, dass** das Volumenverhältnis 1:2 bis 2:1 beträgt, insbesondere etwa 1:1.

## Revendications

1. Composition d'hydrocarbures pouvant être utilisée dans les moteurs à allumage par compression (CI), **caractérisée en ce que** ladite composition comprend du diesel hydrotraité, dérivé selon le procédé Fischer-Tropsch, ayant une densité inférieure à 0,8 kg/l à 15°C, et du biodiesel comprenant des esters méthyliques et/ou éthyliques d'huiles grasses de triglycérides biologiquement dérivées et présentant une densité supérieure à 0,8 kg/l à 15°C, dans un rapport volumétrique entre le diesel Fischer-Tropsch hydrotraité et le biodiesel allant de 1:4 à 4:1, ladite composition présentant une densité supérieure à 0,8 kg/l à 15°C et une viscosité inférieure à 4,1 cSt.

2. Composition d'hydrocarbures selon la revendication 1 des revendications précédentes, **caractérisée en ce que** le rapport volumétrique est entre 1:2 et 2:1, typiquement 1:1.

3. Composition d'hydrocarbures selon la revendication 1 ou la revendication 2, **caractérisée en ce que** ladite composition possède un indice de cétane supérieur à 50, typiquement supérieur à 55.

4. Composition d'hydrocarbures selon l'une quelconque des revendications précédentes, **caractérisée en ce que** ladite composition présente une valeur CFPP selon IP 309 inférieure à -12°C, typiquement inférieure à -15°C.

5. Composition d'hydrocarbures selon l'une quelconque des revendications précédentes, **caractérisée en ce que** ledit biodiesel comprend un mélange d'esters méthyliques linéaires C₁₀ - C₂₀ avec des quantités mineures d'eau, de glycérol et de méthanol.

6. Composition d'hydrocarbures selon l'une quelconque des revendications précédentes, **caractérisée en ce que** le diesel hydrotraité, dérivé selon le procédé Fischer-Tropsch et mélangé avec du biodiesel est dérivé d'un procédé de synthèse Fischer-Tropsch en faisant appel à un catalyseur, qui est basé sur un métal sélectionné dans un groupe constitué de fer, de cobalt et de ruthénium, ou de mélanges d'un ou de plusieurs de ces derniers.

7. Utilisation d'une composition comprenant du diesel hydrotraité, dérivé selon le procédé Fischer-Tropsch, ayant une densité inférieure à 0,8 kg/l à 15°C, et du biodiesel comprenant des esters méthyliques et/ou éthyliques d'huiles grasses de triglycérides biologiquement dérivées et présentant une densité supérieure à 0,8 kg/l à 15°C, dans un rapport volumétrique entre le diesel Fischer-Tropsch hydrotraité et le biodiesel allant de 1:4 à 4:1, ladite composition présentant une densité supérieure à 0,8 kg/l à 15°C et une viscosité inférieure à 4,1 cSt en tant que constituant de mélange pour une composition d'hydrocarbures pouvant être utilisée dans les moteurs à allumage par compression (moteurs CI).

8. Utilisation selon la revendication 7, **caractérisée en ce que** le rapport volumétrique est entre 1:2 et 2:1, typiquement 1:1.

9. Méthode consistant à augmenter la densité d'une composition d'hydrocarbures comprenant du diesel hydrotraité, dérivé selon le procédé Fischer-Tropsch, ayant une densité inférieure à 0,8 kg/l à 15°C en mélangeant du biodiesel comprenant des esters méthyliques et/ou éthyliques d'huiles grasses de triglycérides biologiquement dérivées et présentant une densité supérieure à 0,8 kg/l à 15°C dans la composition d'hydrocarbures dans un rapport volumétrique entre la composition d'hydrocarbures et le biodiesel allant de 1:4 à 4:1, de sorte que ladite composition présente une densité supérieure à 0,8 kg/l à15°C et une viscosité inférieure à 4,1 cSt.

10. Méthode selon la revendication 9, **caractérisée en ce que** le rapport volumétrique est entre 1:2 et 2:1, typiquement environ 1:1.
